# EUROPEAN PATENT APPLICATION

(11) **EP 2 409 749 A1**
(43) Date of publication of application: **25.01.2012**
(21) Application number: 11173479.4
(22) Date of filing: 11.07.2011
(51) Int. Cl.: B01D 29/11, B01D 29/21

(54) **Coreless filter cartridge and method of forming a coreless filter cartridge**

(30) Priority: 19.07.2010 US 839136
(71) Applicant: General Electric Company, Schenectady, NY 12345 (US)
(72) Inventor: Mei, Jason, Raytown, MO Missouri 64133 (US); Doehla, James Roy, Raytown, MO Missouri 64133 (US); Yetter, Bryan David, Raytown, MO Missouri 64133 (US)
(74) Representative: Bedford, Grant Richard

(57) **Abstract**

A coreless filter cartridge (20, 150) includes a filtration media (24, 154) having a plurality of pleats (26, 156) formed in a tubular configuration (91). The filtration media (24, 154) includes a first end (30, 160) that extends to a second end (31, 161) through an intermediate portion (33, 163) having an exterior surface (36, 166) and an interior surface (37, 167) that defines a hollow core (40, 170). At least one retention device (56, 57, 58, 59, 60, 61, 62, 63) is adhered to the exterior surface (36, 166) of the filtration media (24, 154). The at least one retention device (56, 57, 58, 59, 60, 61, 62, 63) is configured and disposed to limit radial movement of the filtration media (24, 154). The filter cartridge is devoid of an internal core support provided within the hollow core (40, 170) thereby establishing a coreless filter cartridge (20, 150).

## Description

The subject matter disclosed herein relates generally to the art of filter cartridges and, more particularly, to a coreless filter cartridge.

Various processes employ filters to remove particulate from a fluid stream. In many instances, pleats are formed in a filtration media to enhance an overall surface area of the filters. A particulate laden fluid is passed in one direction through the filtration media. The filtration media is configured to trap the particulate yet allow the fluid stream to pass through. In this manner, particulate of a desired size range is removed from the fluid stream.

Over time, it is desirable to clean the filtration media. One method of cleaning the filtration media is to guide pulses of cleaning fluid through the filter in an opposite direction. The pulses of cleaning fluid urge the particulate from the filtration media thereby renewing the filter. Such filters are called "pulse pleat" filters. Existing pulse pleat filters employ an internal core that provides support to the filtration media during the fluid flow in the one direction and external straps that limit excessive movement of the filtration media during exposure to the cleaning fluid pulses.

According to one aspect of the invention, a coreless filter cartridge includes a filtration media having a plurality of pleats formed in a tubular configuration. The filtration media includes a first end that extends to a second end through an intermediate portion having an exterior surface and an interior surface that defines a hollow core. At least one retention device is adhered to the exterior surface of the filtration media. The at least one retention device is configured and disposed to limit radial movement of the filtration media. The filter cartridge is devoid of an internal core support provided within the hollow core thereby establishing a coreless filter cartridge.

According to another aspect of the invention, a method of forming a coreless filter cartridge includes positioning a filtration media having a plurality of pleats upon a support tube, wrapping the filtration media about the support tube to form a filter tube having hollow core, binding the filtration media with at least one retention device, adhering the at least one retention device to the plurality of pleats, and removing the support tube from the hollow core to form a filter cartridge devoid of an internal support core.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a partially cut away perspective view of a collector including a plurality of coreless filter cartridges in accordance with an exemplary embodiment;
FIG. 2 is a lower left partially cut-away perspective view of one of the plurality of coreless filter cartridge in accordance with an exemplary embodiment;
FIG. 3 is a cut-away detail view of an end portion of the coreless filter cartridge of FIG. 2;
FIG. 4 is a cross-sectional view of the coreless filter cartridge of FIG. 2;
FIG. 5 is a lower left perspective view of a support tube employed in connection with forming the coreless filter cartridge of FIG. 2;
FIG. 6 illustrated a system for applying retention devices to the coreless filter cartridge of FIG. 2;
FIG. 7 is a lower left partially cut-away perspective view of a coreless filter cartridge in accordance with another aspect of the exemplary embodiment;
FIG. 8 is a cut-away detail view of an end portion of the coreless filter cartridge including retention devices in accordance with another aspect of the exemplary embodiment;
FIG. 9 is a perspective view of the retention device in accordance with the other aspect of the exemplary embodiment; and
FIG. 10 is a cross sectional view of the coreless filters cartridge of FIG. 8.

The detailed description explains embodiments of the invention, together with advantages and features, by way of example with reference to the drawings.

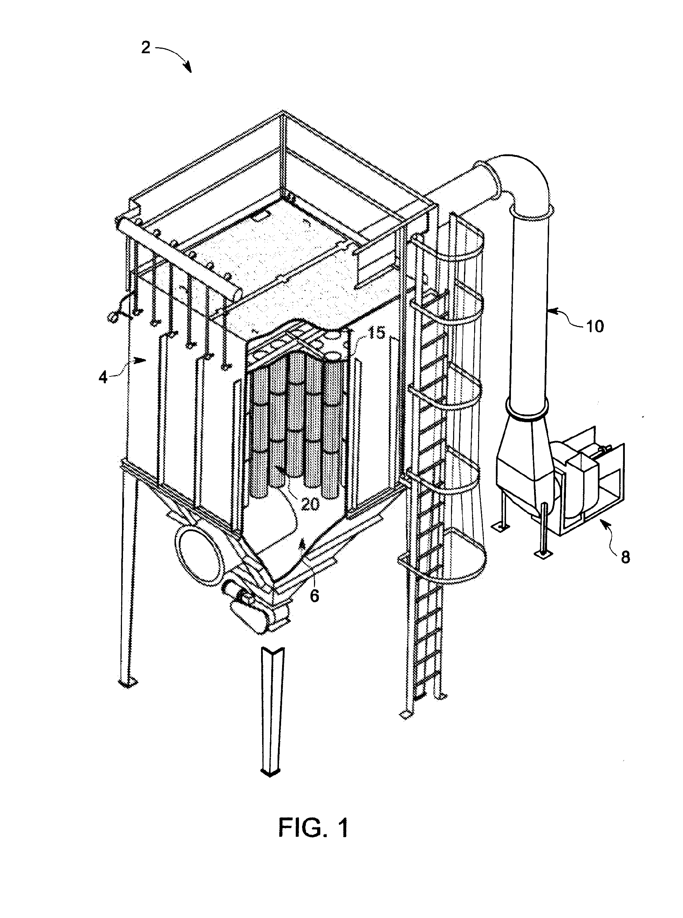

A collector for removing pollutants from a fluid stream is indicated generally at 2 in FIG. 1. Collector 2 includes a housing 4 having a plenum 6 that is fluidly connected to a fluid supply system 8 by a duct 10. A tube sheet 15 is mounted within plenum 6. Tube sheet 15 supports a plurality of coreless filter cartridges, one of which is indicated at 20. Coreless filter cartridge 20 removes particulate entrained in a pollutant laden fluid stream flowing in one direction into plenum 6 from fluid supply system 8. The term "pollutant laden fluid stream" should be understood to include a dry air stream as well as other forms of fluids including dry fluids and liquid laden fluids. Collector 2 is employed as part of an air pollution control system (not shown). Coreless filter cartridge 20 is a "pulse pleat" type of filter cartridge that is periodically subjected to a pulsed cleaning fluid moving in a direction opposite to the direction of flow of the pollutant laden fluid stream. Over an operational life that may last about two years or more, coreless filter cartridge may be subjected up to 300,000 cleaning pulses per year.

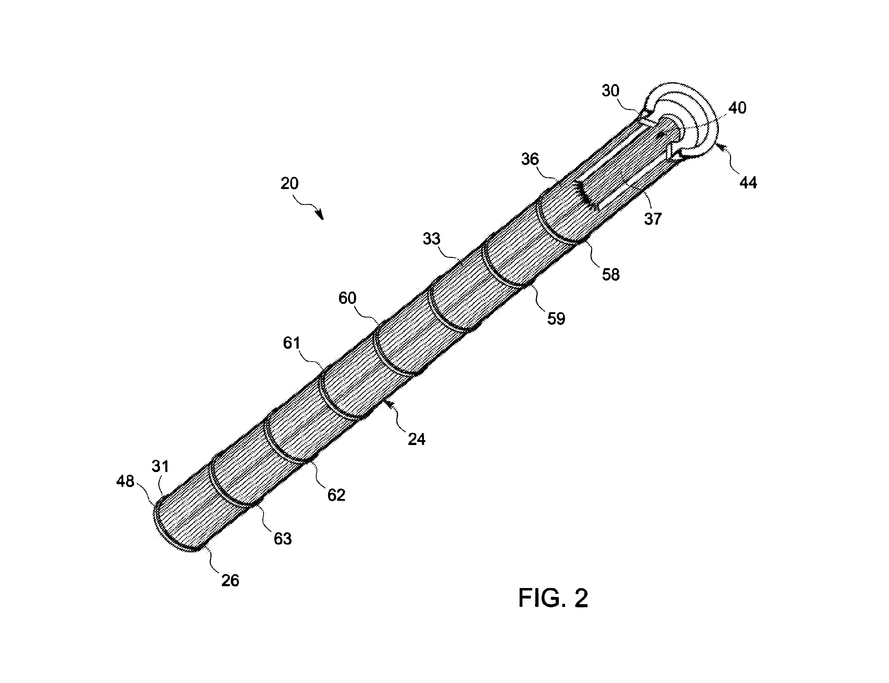

As best shown in FIGs. 2-4, filter cartridge 20 includes a filtration media 24 that is formed in a generally tubular or cylindrical configuration as will be discussed more fully below. Filtration media 24 includes a plurality of pleats 26 that increase an overall surface area of filter cartridge 20 to enhance removal of particles from the pollutant laden fluid flow. Pleats 26 are circumferentially spaced about a circumference (not separately labeled) of filter cartridge 20. Each pleat includes a tip portion indicated generally at 27 and adjacent recessed regions 28 and 29. Coreless filter cartridge 20 includes a first end 30 that extends to a second end 31 through an intermediate portion 33. Intermediate portion 33 includes an exterior surface 36 and an interior surface 37 that defines a hollow core 40. As will be discussed more fully below, hollow core 40 is devoid of any internal support thereby establishing filter cartridge 20 as being coreless.

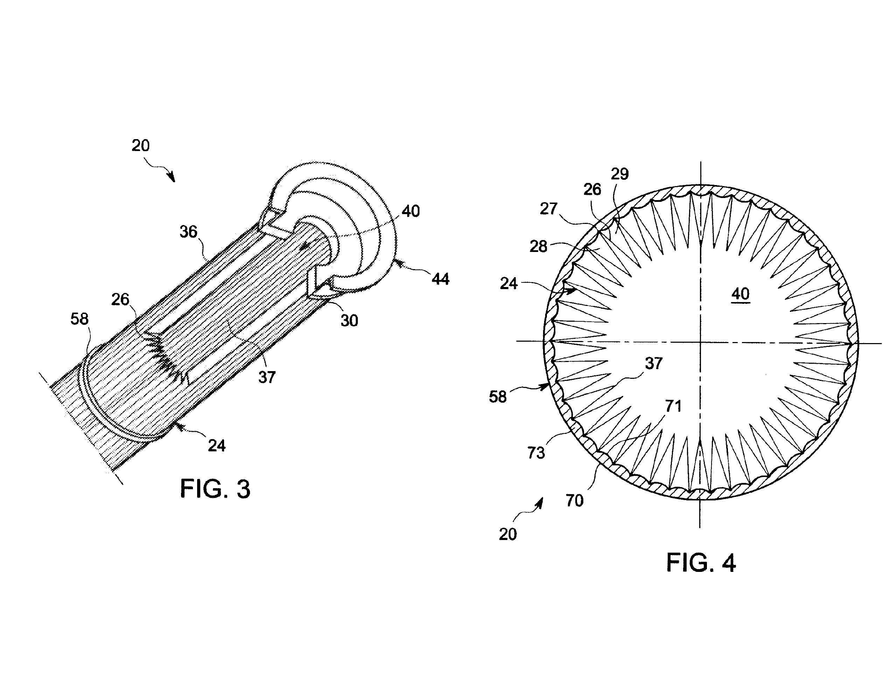

Coreless filter cartridge 20 includes a mounting member 44 provided at first end 30. Mounting member 44 serves as an interface between coreless filter cartridge 20 and tube sheet 15. An end cap 48 is provided at second end 31. End cap 48 closes off second end 31 forcing the pollutant laded fluid to pass through filtration media 24. In the exemplary embodiment shown, coreless filter cartridge 20 includes a plurality of retention devices 58-63 formed from a hard plastic such as Hytrel® manufactured by Dupont. Of course various other polymers can also be employed. Retention devices 56-63 extend circumferentially about exterior surface 36. As will be detailed more fully below, retention devices 58-63 are shown in the form of circular straps that prevent axial expansion and collapse of filtration media 24 during operation. Retention devices 58-63 include an external surface 70 and an internal surface 71 such as shown in connection with retention device 58 in FIG. 4. Internal surface 71 is adhered to each tip portion 27 of the plurality of pleats 26. Internal surface 71 is also provided with a plurality of projections such as shown at 73 that extend into adjacent recessed regions 28, 29 and are bonded to side portions (not separately labeled) of the plurality of pleats 26. With this arrangement, retention devices 58-63 not only prevent expansion of filtration media 24 during purge cycles, but also prevent collapse during normal filtration. In this manner, coreless filter cartridge 20 is formed devoid of an internal support core. By devoid of an internal support core, it should be understood that coreless filter cartridge 20 does not require any internal support structure to resist collapse of the plurality of pleats.

In accordance with an exemplary embodiment, filtration media 24 is formed from a material configured to withstand collapse pressure of between about 2 to about 8 inches in water column (about 5.07 to about 20.31 centimeters of water [4°C]), and as much as 21 inches in water column [53.33 centimeters of water [4°C]) or more depending upon the particular material employed for filtration media 24. In accordance with one aspect of the exemplary embodiment, filtration media 24 is formed from a spunbond polyester media having a calendered finish, a basis weight of between about 6.5 and about 9.5 oz/sq. yd. (about 219.3 to about 320.6 g/sq. m.), a thickness of between about 0.020 and about 0.040 inches (about 0.508 to about 1.02 mm) and a Gurley stiffness test range from: Warp Direction >1500 mg and fill direction of about >1000 mg. In accordance with another aspect of the exemplary embodiment filtration media 24 is formed from woven synthetic such as woven acrylic and/or woven polypropylene. In accordance with yet another aspect of the exemplary embodiment, filtration media 24 is formed from a non-woven synthetic such as non-woven acrylic and/or non-woven polypropylene. In accordance with still another aspect of the exemplary embodiment, filtration media 24 is formed from a laminated expanded polytetrafluoroethylene (ePTFE) material.

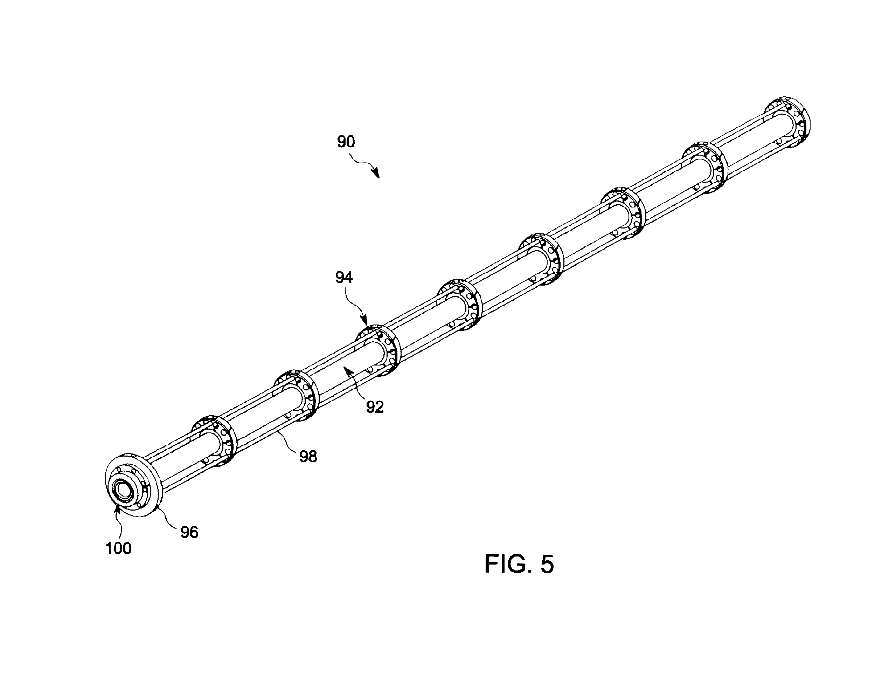

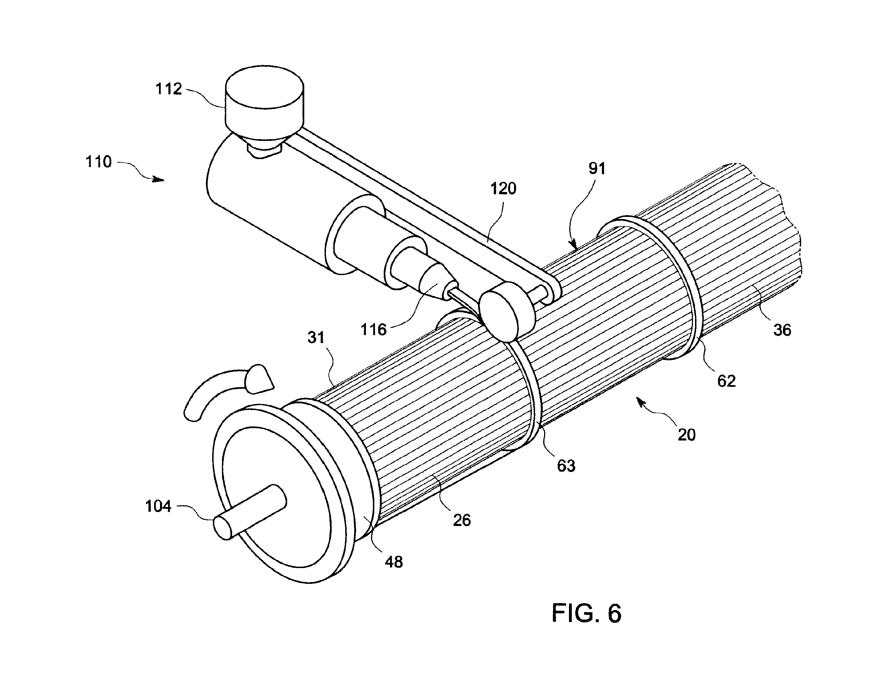

Reference will now follow to FIGs. 5 and 6 in describing a method of forming coreless filter cartridge 20. Initially, filtration media 24 is wrapped around a fixture 90 to form the generally tubular or cylindrical filter tube 91 having a hollow core. Fixture 90 includes a support tube 92 having mounted thereto a plurality of expansion disks, one of which is indicated at 94 and an end cap 96. The plurality of expansion disks 94 are aligned one with another and end cap 96 by a plurality of alignment rods, one of which is indicated at 98. As will be discussed more fully below, end cap 96 is provided with an adjustment knob 100 that selectively controls an outer diametric size of the plurality of expansion disks. Once filtration media 24 is applied to fixture 90 to form filter tube 91, adjustment knob 100 is operated to expand expansion disks 94. A mandrel 104 is arranged within fixture 90 and the plurality or retention devices are applied. An extruder 110 delivers the hard plastic material from a hopper 112 to a dispensing nozzle 116. As the material leaves dispensing nozzle 116, fixture 90 is rotated about a longitudinal axis and a compressive force is applied to filter tube 91 by a compression roller 120. The hard plastic material flows into recessed regions 28 and 29 and bonds with both tip portions 27 and side portions (not separately labeled) of the plurality of pleats 26. Once coreless filter cartridge 20 makes one complete rotation, extruder 110 stops the flow of material and the retention device is formed. After forming any remaining retention devices, adjustment knob 100 is operated to retract expansion disks 94 allowing fixture 90 to be removed from coreless filter cartridge 20.

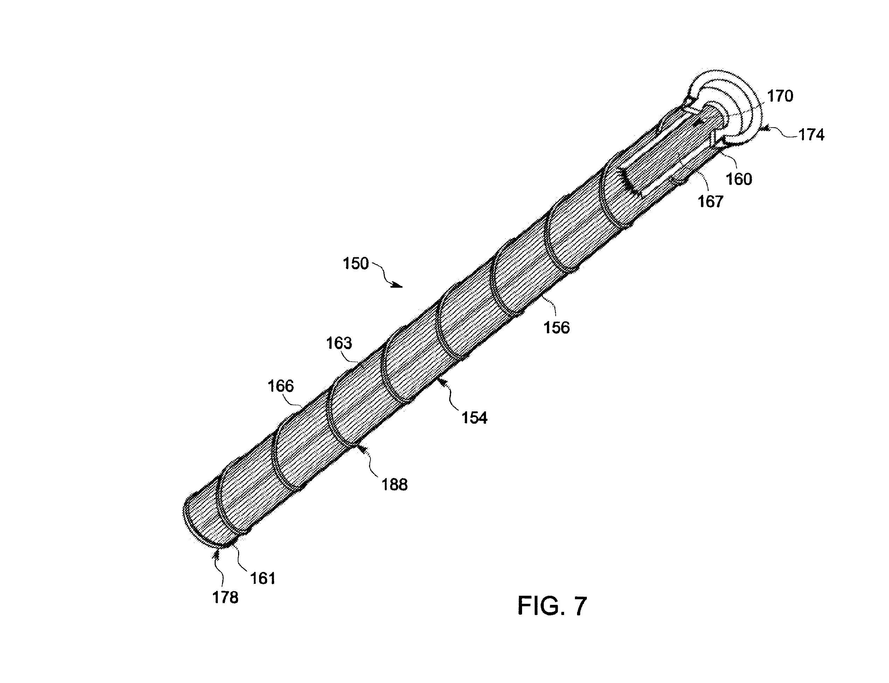

Reference will now be made to FIG. 7 in describing a coreless filter cartridge 150 in accordance with aspects of the exemplary embodiment. Coreless filter cartridge 150 includes a filtration media 154 that is formed in a generally tubular or cylindrical configuration in a manner similar to that described above. Filtration media 154 includes a plurality of pleats 156 that increase an overall surface area of filter cartridge 150 to enhance removal of particles from the pollutant laden fluid flow. Pleats 156 are circumferentially spaced about a circumference (not separately labeled) of filter cartridge 150. Coreless filter cartridge 150 includes a first end 160 that extends to a second end 161 through an intermediate portion 163. Intermediate portion 163 includes an exterior surface 166 and an interior surface 167 that defines a hollow core 170. As will be discussed more fully below, hollow core 170 is not provided with any internal support thereby establishing filter cartridge 150 as being coreless.

Coreless filter cartridge 150 includes a mounting member 174 provided at first end 160. Mounting member 174 serves as an interface between coreless filter cartridge 150 and tube sheet 15. An end cap 178 is provided at second end 161. End cap 178 closes off second end 161 forcing the pollutant laded fluid to pass through filtration media 154. In the exemplary embodiment shown, coreless filter cartridge 150 includes a single retention device 188. Retention device 188 extends along a helical path over filtration media 154 from first end 160 to second end 161. That is, instead of simply rotating filter cartridge 150 about a longitudinal axis when applying retention devices, in accordance with the exemplary aspect shown, filter cartridge 150 also translates along the longitudinal axis. In this manner, retention device 188 is applied as a helical strap.

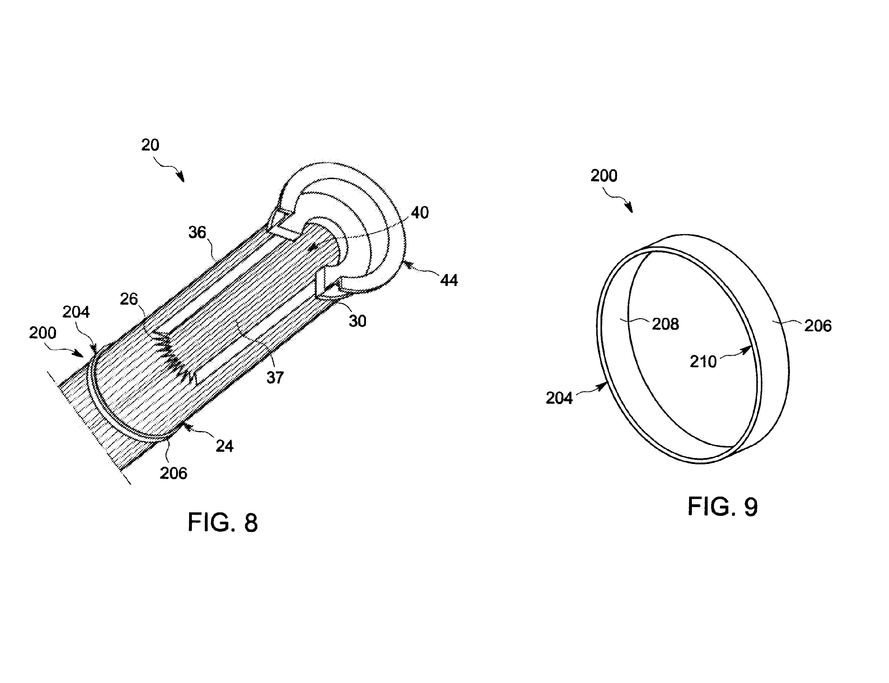

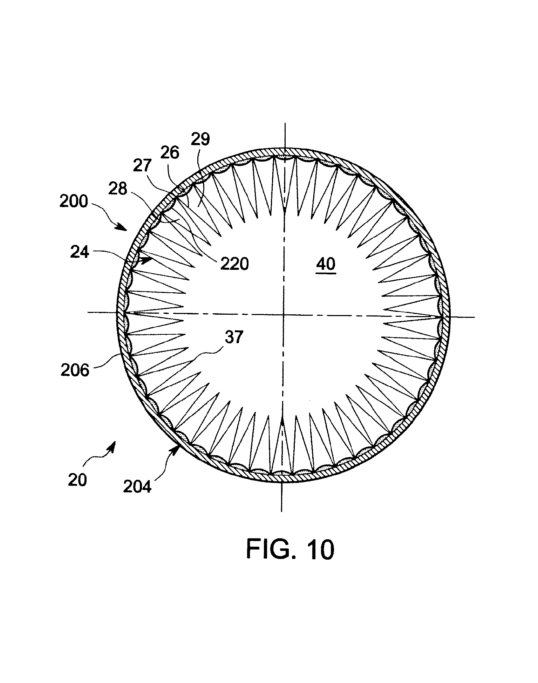

Reference will now follow to FIGS. 8-10, wherein like reference numbers represent corresponding parts in the respective views, in describing a retention device 200 in accordance with another aspect of the exemplary embodiment. Retention device 200 includes a body 204 having an outer surface 206 and an inner surface 208 that defines an annular ring or band 210. Body 204 is formed from a rigid material such as metal, molded plastic and the like. Retention device 200 is fitted over the plurality of pleats 24 of filter cartridge 20. Retention device 200 is secured to the plurality of pleats 24 with an adhesive 220. In accordance with an aspect of the exemplary embodiment, adhesive 220 is a hot melt adhesive that not only adheres to inner surface 208 to tip portions 27 of the plurality of pleats 26 but also flows into recessed regions 27, 28 to bond with side portions of the plurality of pleats 26. In this manner, retention device 200 not only prevents expansion of the plurality of pleats 26 during a back flow purge, but also prevents collapse during normal filtration thereby eliminating the need for an internal core. In accordance with one aspect of the exemplary embodiment, band 210 is pre-formed prior to being installed onto filter cartridge 20. In accordance with another aspect of the exemplary embodiment, band 210 is applied as a strip of rigid material that is wrapped about filter cartridge 20. End portions of the strip of rigid material are then joined to form band 210.

At this point it should be understood that the exemplary embodiments provides a coreless filter cartridge for a pollutant removal system. Despite the lack of an internal core, the filter cartridge not only resists collapse resulting from pulsed cleaning but also resists axial expansion during operation. By forming the filtration cartridge without an internal core, manufacturing and material costs are reduced. The reduction in manufacturing and materials costs allows manufacturers to offer the coreless filter cartridge at a reduced price. The reduced price opens consumer markets previously unavailable to manufacturers of filter cartridges that include cores. In addition to a lower price point, the filter cartridge in accordance with the exemplary embodiment also provides various performance benefits that lead to a reduction in operating costs of the filtration system.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A coreless filter cartridge comprising:
   a filtration media including a plurality of pleats formed in a tubular configuration, the filtration media including a first end that extends to a second end through an intermediate portion having an exterior surface and an interior surface that defines a hollow core; and
   at least one retention device adhered to the exterior surface of the filtration media, the at least one retention device being configured and disposed to limit radial movement of the filtration media, wherein the filter cartridge is devoid of an internal core support provided within the hollow core thereby establishing a coreless filter cartridge.
2. The coreless filter cartridge according to clause 1, wherein the filtration media is formed from a material configured to withstand a collapse pressure of between 2 to about 8 inches in water column (about 5.07 to about 20.31 centimeters of water [4°C]).
3. The coreless filter cartridge according to any preceding clause, wherein the filtration media is formed from at least one of a woven synthetic, a non-woven synthetic, and a laminated expanded polytetrafluoroethylene (ePTFE) material.
4. The coreless filter cartridge according to any preceding clause, wherein the at least one retention device is formed from an extruded hard plastic.
5. The coreless filter cartridge according to any preceding clause, wherein the at least one retention device is formed from a pre-formed rigid material.
6. The coreless filter cartridge according to any preceding clause, wherein the pre-formed rigid material is a metal.
7. The coreless filter cartridge according to any preceding clause, wherein the at least one retention device comprises a plurality of retention devices that extend circumferentially about the exterior surface of the filtration media.
8. The coreless filter cartridge according to any preceding clause, wherein the plurality of retention devices are spaced one from another along the intermediate portion of the filtration media.
9. The coreless filter cartridge according to any preceding clause, wherein the at least one retention device comprises a single retention device that wraps about the exterior surface of the filtration media from the first end to the second end.
10. The coreless filter cartridge according to any preceding clause, wherein the at least one retention device includes an external surface and an internal surface, the internal surface including a plurality of projections that are adhered to side portions of the plurality of pleats.
11. A method of forming a coreless filter cartridge, the method comprising:
   positioning a filtration media having a plurality of pleats upon a support tube;
   wrapping the filtration media about the support tube to form a filter tube having a hollow core;
   binding the filtration media with at least one retention device;
   adhering the at least one retention device to the plurality of pleats; and
   removing the support tube from the hollow core to form a filter cartridge devoid of an internal support core.
12. The method of any preceding clause, wherein wrapping the filtration media about the support tube includes rolling the filtration media about a plurality of adjustable discs positioned upon the support tube.
13. The method of any preceding clause, further comprising: reducing an external diameter of the adjustable discs prior to removing the support tube from the hollow core.
14. The method of any preceding clause, further comprising compressing the filtration media before applying the at least one retention device.
15. The method of any preceding clause, wherein binding the filtration media with the at least one retention device includes extruding a plastic material onto an external surface of the plurality of pleats.
16. The method of any preceding clause, further comprising: adhering the extruded material to side portions of the plurality of pleats.
17. The method of any preceding clause, wherein binding the filtration media with the at least one retention device includes wrapping a single retention strap around the filtration media in a helical pattern.
18. The method of any preceding clause, wherein binding the filtration media with the at least one retention device includes positioning a preformed band about the filtration media.
19. The method of any preceding clause, further comprising: adhering the preformed band to the plurality of pleats with an adhesive.
20. The method of any preceding clause, wherein adhering the preformed band to the plurality of pleats includes securing the preformed band to the plurality of pleats with a hot melt adhesive, the hot melt adhesive adhering to tip portions and side portions of the plurality of pleats.

## Claims

1. A coreless filter cartridge (20, 150) comprising:
a filtration media (24, 154) including a plurality of pleats (26, 156) formed in a tubular configuration (91), the filtration media (24, 154) including a first end (30, 160) that extends to a second end (31, 161) through an intermediate portion (33, 163) having an exterior surface (36, 166) and an interior surface (37, 167) that defines a hollow core (40, 170); and
at least one retention device (56, 57, 58, 59, 60, 61, 62, 63) adhered to the exterior surface (36, 166) of the filtration media (24, 154), the at least one retention device (56, 57, 58, 59, 60, 61, 62, 63) being configured and disposed to limit radial movement of the filtration media (24, 154), wherein the filter cartridge is devoid of an internal core support provided within the hollow core (40, 170) thereby establishing a coreless filter cartridge (20, 150).

2. The coreless filter cartridge (20, 150) according to claim 1, wherein the filtration media (24, 154) is formed from a material configured to withstand a collapse pressure of between 2 to about 8 inches in water column (about 5.07 to about 20.31 1 centimeters of water [4°C]).

3. The coreless filter cartridge (20, 150) according to any preceding claim, wherein the filtration media (24, 154) is formed from at least one of a woven synthetic, a non-woven synthetic, and a laminated expanded polytetrafluoroethylene (ePTFE) material.

4. The coreless filter cartridge (20, 150) according to any preceding claim, wherein the at least one retention device (56, 57, 58, 59, 60, 61, 62, 63) is formed from an extruded (110) hard plastic.

5. The coreless filter cartridge (20, 150) according to any preceding claim, wherein the at least one retention device (56, 57, 58, 59, 60, 61, 62, 63) is formed from a pre-formed rigid material.

6. The coreless filter cartridge (20, 150) according to claim 5, wherein the pre-formed rigid material is a metal.

7. The coreless filter cartridge (20, 150) according to any preceding claim, wherein the at least one retention device (56, 57, 58, 59, 60, 61, 62, 63) comprises a plurality of retention devices (56, 57, 58, 59, 60, 61, 62, 63) that extend circumferentially about the exterior surface (36, 166) of the filtration media (24, 154).

8. The coreless filter cartridge (20, 150) according to any preceding claim, wherein the plurality of retention devices (56, 57, 58, 59, 60, 61, 62, 63) are spaced one from another along the intermediate portion (33, 163) of the filtration media (24, 154).

9. The coreless filter cartridge (20, 150) according to any preceding claim, wherein the at least one retention device (56, 57, 58, 59, 60, 61, 62, 63) comprises a single retention device (56, 57, 58, 59, 60, 61, 62, 63) that wraps about the exterior surface (36, 166) of the filtration media (24, 154) from the first end (30, 160) to the second end (31, 161).

10. The coreless filter cartridge (20, 150) according to any preceding claim, wherein the at least one retention device (56, 57, 58, 59, 60, 61, 62, 63) includes an external surface (70) and an internal surface (71), the internal surface (71) including a plurality of projections (73) that are adhered to side portions of the plurality of pleats (26, 156).
